# EUROPEAN PATENT APPLICATION

(11) **EP 2 447 759 A2**
(43) Date of publication of application: **02.05.2012**
(21) Application number: 11179564.7
(22) Date of filing: 31.08.2011
(51) Int. Cl.: G02B 27/01

(54) **Real-time warning system for vehicle windshield and performing method thereof**

(30) Priority: 29.10.2010 TW 099137288
(71) Applicant: National Taiwan University of Science and Technology, 106 Taipei City (TW)
(72) Inventor: Lin, Chyi-yeu, 106 Taipei City (TW); Jiang, Jinn-feng, 106 Taipei City (TW)
(74) Representative: Petraz, Gilberto Luigi

(57) **Abstract**

A real-time warning system for a vehicle windshield (12) and a performing method thereof are disclosed. The real-time warning system includes an image capture unit (14), an image processing unit (16), a calculation and control unit (18), and a robotic optical projection unit (20). The image capture unit (14) continually captures images appearing in front of a vehicle (10). The image processing unit (16) determines an obstacle (22) according to the images appearing in front of the vehicle (10). The calculation and control unit (18) calculates an intersection point (28) between a straight line (26) and the vehicle windshield (12), wherein the straight line (26) connects the obstacle (22) and a head position of a driver (24) in the vehicle (10). The robotic optical projection unit (20) generates a warning mark (30) onto the vehicle windshield (12) so that the driver (24) can easily see the obstacle (22) ahead.

## Description

### BACKGROUND OF THE INVENTION

### 1. Field of the Invention

The present invention generally relates to a warning system, and more particularly to a real-time warning system for a vehicle windshield and a performing method thereof.

### 2. Description of Prior Art

Vehicles have become commonly used means of transportation. However, when a driver's view is inadequate or when the driver becomes distracted, the driver frequently drives a vehicle hitting obstacles suddenly appearing in front, such as pedestrians, animals, other vehicles, etc., and this frequently causes car accidents to happen.

To reduce car accident occurrences of the above-mentioned situation and the like, there is a pedestrian warning system used in an intelligent vehicle in the market. In the pedestrian warning system, a camera which is disposed in the front of the intelligent vehicle captures images appearing in front of the intelligent vehicle. Then, after the images are processed, the obstacle which might be appearing or entering into a lane is marked and displayed on a monitor of the intelligent vehicle, whereby the driver is reminded to drive carefully for preventing the intelligent vehicle from bumping into the obstacle.

Generally speaking, the monitor is often installed somewhere on or below the dashboard so that the driver has to lower his/her sight away from the drive lane to view it. However, the action of the driver lowering his/her head is dangerous because the driver cannot pay attention to a situation appearing in front of the intelligent vehicle. Furthermore, it is also dangerous when the eyes of the driver move back and forth between watching the monitor and the situation appearing in front of the intelligent vehicle.

Therefore, there is a need to solve the above-mentioned disadvantages in the pedestrian warning system used in the intelligent vehicle.

### SUMMARY OF THE INVENTION

An objective of the present invention is to provide a real-time warning system for a vehicle windshield and a performing method thereof, which are capable of showing a warning mark as a reminder to warn against danger ahead of the vehicle.

According to an aspect of the present invention, a real-time warning system for a vehicle windshield is provided, and the real-time warning system comprises an image capture unit, an image processing unit, a calculation and control unit, and a robotic optical projection unit. The image capture unit continually captures images appearing in front of a vehicle. The image processing unit is electrically coupled to the image capture unit. The image processing unit determines an obstacle according to the image appearing in front of the vehicle. The calculation and control unit is electrically coupled to the image processing unit. The calculation and control unit calculates an intersection point between a straight line and the vehicle windshield, wherein the straight line connects the obstacle and a driver's head position in the vehicle. The robotic optical projection unit is electrically coupled to the calculation and control unit. The robotic optical projection unit which is controlled by the calculation and control unit generates a warning mark onto the windshield, so that the driver may see the obstacle appearing in front of the vehicle via the warning mark.

According to another aspect of the present invention, a method to be performed in a real-time warning system for a vehicle windshield is provided. The method comprises steps of: capturing images appearing in front of a vehicle by an image capture unit; determining an obstacle according to the images appearing in front of the vehicle; calculating an intersection point between a straight line and the vehicle windshield, wherein the straight line connects the obstacle and a driver's head position in the vehicle; and generating a warning mark onto the vehicle windshield by a robotic optical projection unit.

The real-time warning system for the vehicle windshield and the performing method thereof can show the warning mark onto the vehicle windshield, so that the driver can see any obstacle which might cause danger via the warning mark. Accordingly, the probability of danger occurring can be reduced when the driver moves away his/her sight from the drive line to view the monitor in the conventional warning system.

### BRIEF DESCRIPTION OF THE DRAWINGS

FIG.1 illustrates a real-time warning system for a vehicle windshield according to a first embodiment of the present invention;

FIG. 2 illustrates a real-time warning system for a vehicle windshield according to a second embodiment of the present invention;

FIG. 3 illustrates the warning mark projected onto the vehicle windshield; and

FIG. 4 illustrates a flow chart of a method to be performed in a real-time warning system for a vehicle windshield according to the present invention.

### DETAILED DESCRIPTION OF THE INVENTION

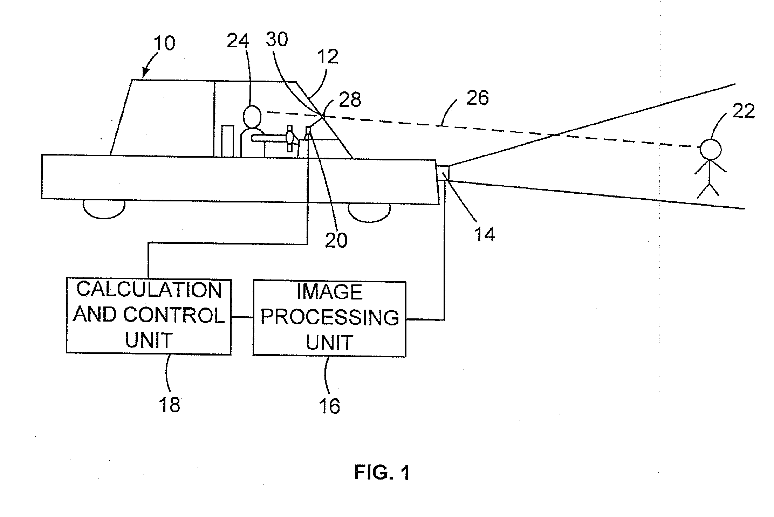

With reference to the drawings and in particular to FIG. 1, a real-time warning system for a vehicle windshield according to a first embodiment of the present invention is illustrated. As a descriptive example, the real-time warning system comprises an image capture unit 14, an image processing unit 16, a calculation and control unit 18, and a robotic optical projection unit 20.

In the present embodiment, the image capture unit 14 is disposed outside a vehicle 10. The image capture unit 14 functions to capture images appearing in front of the vehicle 10. In another embodiment, the image capture unit 14 may be disposed inside the vehicle 10 or at another position as long as it is able to capture the images appearing in front of the vehicle 10. The image capture unit 14 may be, for example, one or more charge coupled devices (CCD), one or more complementary metal oxide semiconductor (CMOS) sensors, or time-of-flight cameras.

The image processing unit 16 is electrically coupled to the image capture unit 14. The image processing unit 16 functions to analyze and process the images. The calculation and control unit 18 is electrically coupled to the image processing unit 16. The robotic optical projection unit 20 is electrically coupled to the calculation and control unit 18. The robotic optical projection unit 20 may be disposed at a position to be able to project light on the vehicle windshield 12.

When the real-time warning system is in operation, the image capture unit 14 continually captures the images appearing in front of the vehicle 10 firstly, and then the image is transmitted to the image processing unit 16. The image processing unit 16 analyzes and processes the images so as to determine an obstacle 22 when it appears and the position of the obstacle 22. In the present embodiment, the obstacle 22 is a pedestrian. In another embodiment, the obstacle 22 may be one of other moving objects, such as a moving car, a bicycle, and so on. Also, the obstacle 22 may be one of still objects, such as an injured animal or a drunk pedestrian lying on the ground. When the image processing unit 16 determines the obstacle 22 which is appearing in front of the vehicle 10, the image processing unit 16 will subsequently calculates the position of the obstacle 22. The calculation and control unit 18 calculates an intersection point 28 between a straight line 26 and the vehicle windshield 12, wherein the straight line 26 connects the obstacle 22 and a head position of a driver 24 in the vehicle 10. Then, the calculation and control unit 18 controls the light projecting unit 20 to generate a warning mark 30 onto the vehicle windshield 12, whereby the driver 24 may see the obstacle 22 via the warning mark 30 on the vehicle windshield 12 for immediately preventing from encountering danger.

The image capture unit 14 requires a short period of time to capture the image appearing in front of the vehicle 10 and transmit the image to the image processing unit 16 for analyzing the obstacle 22, and, also, the image processing unit 16 requires a short period of time to determine the obstacle 22 and to transmit the position of the obstacle 22 to the calculation and control unit 18. In addition, the calculation and control unit 18 also requires a short period of time to calculate the intersection point 28 between the straight line 26 and the vehicle windshield 12, and the light projection unit 20 requires a short period of time to be controlled to project the warning mark 30 onto the vehicle windshield 12. Accordingly, if the obstacle 22 is in a still position and the vehicle 10 is in a still position, the position of the intersection point 28 will not vary with time. Under this condition, the warning mark 30 is generated on the intersection point 28 with a short delay, and this does not cause any influence on correctly positioning the warning mark 30. However, if the obstacle 22 or the vehicle 10 is moving, the delay of displaying the warning mark 30 on the intersection point 28 may cause the warning mark 30 be projected at a wrong position. Accordingly, in one preferred embodiment, the calculation and control unit 18 calculates an estimated position of the obstacle 22 and an estimated head position of the driver 24 after a delay time according to a moving direction and a moving speed of the obstacle 22 and a forward direction and a forward speed of the vehicle 10, and calculates the intersection point 28 between the straight line 26 and the vehicle windshield 12 after the delay time, wherein the straight line 26 connects the estimated position of the obstacle 22 and the estimated head position of the driver 24. Finally, the calculation and control unit controls the robotic optical projection unit 20 to generate the warning mark 30 on the intersection point 28 in association with the estimated position of the obstacle 22 and the estimated head position of the driver 24.

In some situations, the image processing unit 16 finds that the obstacle 22 in front of the vehicle 10 is not dangerous. For example, when the image processing unit 16 determines the obstacle 22 appearing in front of the vehicle 10, but the vehicle 10 is departing away from the obstacle 22 (such as turning around), the calculation and control unit 18 still calculates the intersection point 28 but selects not to command the robotic optical projection unit 20 to generate the warning mark 30 onto the vehicle windshield 12. In another situation, where the image processing unit 16 determines that the obstacle 22 in front of the vehicle 10 is moving away from the vehicle 10 (such as changing direction), the calculation and control unit 18 still calculates the intersection point 28 but selects not to command the robotic optical projection unit 20 to generate the warning mark 20 on the vehicle windshield 12.

The calculation and control unit 18 may control the robotic optical projection unit 20 with two or more degrees of freedom. That is, the robotic optical projection unit 20 may move with two or more degrees of freedom under the control of the calculation unit 18, whereby the robotic optical projection unit 20 may generate the warning mark 30 at any position on the vehicle windshield 12. A method for generating the warning mark 30 may be, for example, to project a laser light circle on the vehicle windshield 12, so as to remind the driver 24 that there is danger appearing in front of the vehicle 10. Other light sources which are suitable for projecting onto the vehicle windshield 12 may be utilized as well. In a preferred embodiment, the warning mark 30 is generated at the intersection point 28, whereby the driver 24 may directly see the obstacle 22 via the warning mark 30. Furthermore, the calculation and control unit 18 may control the light projection unit 20, such as a laser light emitter, to project different colors or different levels of brightness in accordance with different danger levels. For instance, a distance of less than 10 meters between the vehicle 10 and the obstacle 22 is assumed to be the most dangerous situation, and thus the calculation and control unit 18 controls the robotic optical projection unit 20 to project red light for reminding the driver 24 to pay attention to and avoid the obstacle 22.

It is noted that the calculation and control unit 18 has to obtain in advance the head position of the driver 24 before calculating the straight line 26 and the intersection point 28. A method for obtaining the head position of the driver 24 comprises storing information about the head position of the driver 24 in the calculation and control unit 18 or a memory (not shown) in advance. When the image processing unit 16 determines the obstacle 22 which is appearing in front of the vehicle 10, the calculation and control unit 18 may directly calculate the straight line 26 connecting the obstacle 22 and the head position of the driver 24 and then calculate the intersection point 28. The information about the head position of the driver 24 which is stored in advance is suitable to be applied when the vehicle 10 is always driven by the same driver 24. Generally speaking, the head position of the driver 24 is approximately at a position in front of a headrest of a driver's seat. Therefore, the information about the head position may be obtained by a statistic method and stored in the memory (not shown) in advance. Furthermore, when the driver's seat is adjusted, the adjusted information about the driver's seat may be transmitted to the calculation and control unit 18 so that the calculation and control unit 18 may correspondingly update the information about the head position.

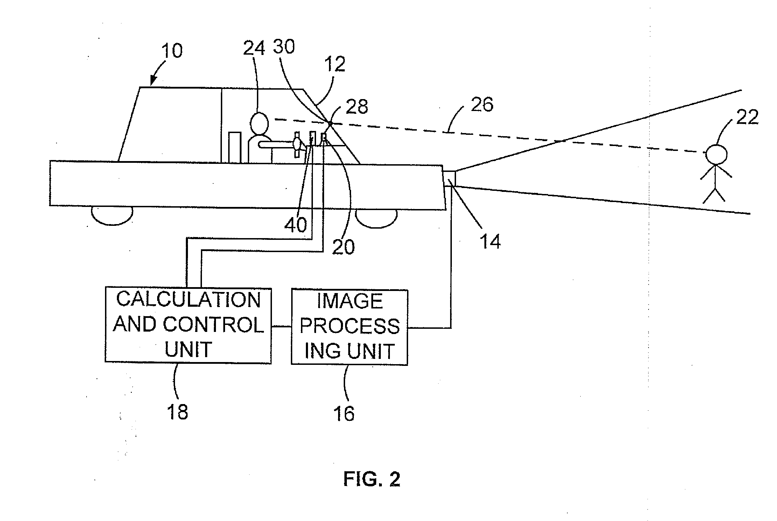

The vehicle 10 is frequently driven by people of different head positions, i.e. a sitting posture of the driver 24 is changed, or the driver 24 adjusts a distance between the driver 24 and a steering wheel, the information about the driver's head position of the vehicle 10 might be varied. Reference is now made to FIG. 2, which illustrates a real-time warning system for a vehicle windshield according to a second embodiment of the present invention. Compared with the first embodiment shown in FIG. 1, the real-time warning system for the vehicle windshield shown in FIG. 2 further comprises a sensing unit 40 electrically coupled to the calculation and control unit 18 for sensing the head position of the driver 24 and transmitting a sensed head position of the driver 24 to the calculation and control unit 18. The calculation and control unit 18 may utilize the sensed result to calculate the straight line 26 connecting the obstacle 22 and the head position of the driver 24 and then calculate the intersection point 28. The sensing unit 40 is disposed, for example, near the robotic optical projection unit 20 or at a position to be able to capture the head position of the driver 24. The sensing unit 40 may be, for example, a charge coupled device (CCD), a complementary metal oxide semiconductor (CMOS) sensor, or a distance sensor.

In conclusion, the first embodiment shown in FIG. 1 does not sense the head position of the driver 24, while the second embodiment shown in FIG. 2 comprises the sensing unit 40 for sensing the head position of the driver 24. As a result, the intersection point 28 calculated in the second embodiment is more accurate than that in the first embodiment.

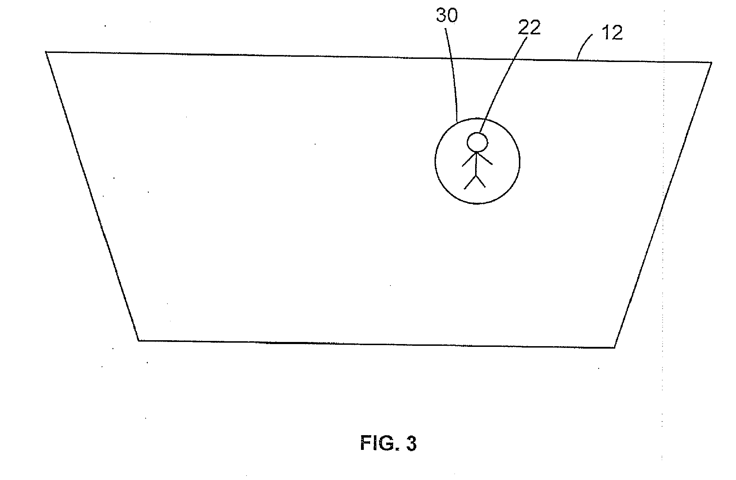

Referring to FIG. 3, a demonstration of projecting the warning mark 30 to the vehicle windshield 12 is illustrated. The warning mark 30 is a circle in this case. The circle may be encircling the obstacle 22 which is appearing in front of the vehicle windshield 12. It is noted that the warning mark 30 is not limited to the circle. The warning mark 30 may be a triangle, a rectangle, a polygon, or an irregular form. Furthermore, the warning mark 30 may be represented by a dotted line or a solid line, and as mentioned above, the warning mark 30 may be different colors or different levels of brightness in accordance with different danger levels. For instance, red is represented as the most dangerous situation for reminding the driver 24 to pay attention right away.

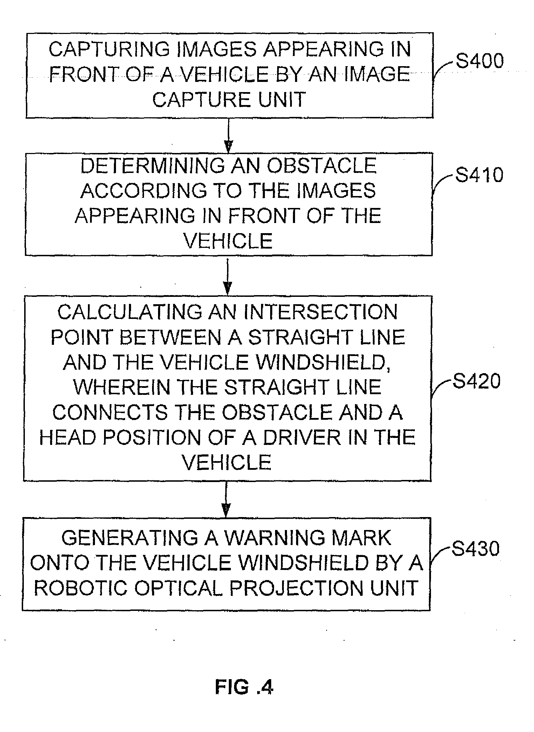

Referring to FIG. 4, a flow chart of a method to be performed in a real-time warning system for a vehicle windshield according to the present invention is illustrated. The performing method comprises the following steps.

In step S400, an image capture unit continuously captures images appearing in front of a vehicle.

In step S410, an obstacle is determined according to the images appearing in front of the vehicle. When the obstacle exists, a position of the obstacle is calculated.

In step S420, an intersection between a straight line and the vehicle windshield is calculated, wherein the straight line connects the obstacle and a head position of a driver inside the vehicle. In one preferred embodiment, an estimated position of the obstacle and an estimated head position of the driver are calculated according to a moving direction and a moving speed of the obstacle and a forward direction and a forward speed of the vehicle after a delay time, and then the intersection point between the straight line and the vehicle windshield after the delay time are calculated, wherein the straight line connects the estimated position of the obstacle and the estimated head position of the driver. In another embodiment, information about the head position is stored in advance. In another embodiment, the performing method further comprises a step of sensing the head position of the driver.

In step S430, a warning mark is generated onto the vehicle windshield by a robotic optical projection unit. The robotic optical projection unit may move with two or more degrees of freedom, whereby the robotic optical projection unit may generate the warning mark at any position on the vehicle windshield. In one preferred embodiment, the warning mark is generated at the intersection point.

The real-time warning system for the vehicle windshield and the performing method thereof in accordance with the present invention can make the driver see the obstacle which might cause danger via the vehicle windshield, whereby decreasing the probability of encountering danger when the driver lowers his/her head to view the monitor in the conventional warning system. Furthermore, the robotic optical projection unit, such as a laser light emitter, compact in size, controlled and installed easily, and consuming no energy in standby situation, therefore, the robotic optical projection unit is more convenient and less power consumption than the monitor in the conventional warning system.

As is understood by a person skilled in the art, the foregoing preferred embodiments of the present invention are illustrative rather than limiting of the present invention. It is intended that they cover various modifications and similar arrangements be included within the spirit and scope of the appended claims, the scope of which should be accorded the broadest interpretation so as to encompass all such modifications and similar structure.

## Claims

1. A real-time warning system for a vehicle windshield (12), **characterized in that** the real-time warning system comprises:
an image capture unit (14) for continually capturing images appearing in front of a vehicle (10);
an image processing unit (16) electrically coupled to the image capture unit (14), the image processing unit (16) determining an obstacle (22) according to the images appearing in front of the vehicle (10);
a calculation and control unit (18) electrically coupled to the image processing unit (16), the calculation and control unit (18) calculating an intersection point (28) between a straight line (26) and the vehicle windshield (12), wherein the straight line (26) connects the obstacle (22) and a head position of a driver (24) in the vehicle (10); and
a robotic optical projection unit (20) electrically coupled to and controlled by the calculation and control unit (18), the robotic optical projection unit (20) generating a warning mark (30) onto the vehicle windshield (12).

2. The system as claimed in claim 1, **characterized in that** the calculation and control unit (18) calculates an estimated position of the obstacle (22) and an estimated head position of the driver (24) according to a moving direction and a moving speed of the obstacle (22) and a forward direction and a forward speed of the vehicle (10) after a delay time, and calculates an intersection point (28) between the straight line (26) and the vehicle windshield (12) after the delay time, wherein the straight line (26) connects the estimated position of the obstacle (22) and the estimated head position of the driver (24).

3. The system as claimed in claim 1, **characterized in that** the system further comprising a sensing unit (40) electrically coupled to the calculation and control unit (18), the sensing unit (40) sensing the head position of the driver (24) and transmitting a sensed result of the head position of the driver (24) to the calculation and control unit (18).

4. The system as claimed in claim 1, **characterized in that** the robotic optical projection unit (20) moves with two or more degrees of freedom.

5. The system as claimed in claim 1, **characterized in that** the robotic optical projection unit (20) projects a laser light for generating the warning mark (30).

6. The system as claimed in claim 1, **characterized in that** the warning mark (30) is generated at the intersection point (28).

7. A performing method of a real-time warning system for a vehicle windshield (12), **characterized in that** the performing method comprises:
capturing images appearing in front of a vehicle (10) by an image capture unit (14);
determining an obstacle (22) according to the images appearing in front of the vehicle (10);
calculating an intersection point (28) between a straight line (26) and the vehicle windshield (12), wherein the straight line (26) connects the obstacle (22) and a head position of a driver (24) in the vehicle (10); and
generating a warning mark (30) onto the vehicle windshield (12) by a robotic optical projection unit (20).

8. The performing method as claimed in claim 7, **characterized in that** in the step of calculating the intersection point (28) between the straight line (26) and the vehicle windshield (12), an estimated position of the obstacle (22) and an estimated head position of the driver (24) are calculated according to a moving direction and a moving speed of the obstacle (22) and a forward direction and a forward speed of the vehicle (10) after a delay time, and an intersection point (28) between the straight line (26) and the vehicle windshield (12) after the delay time is calculated, wherein the straight line (26) connects the estimated position of the obstacle (22) and the estimated head position of the driver (24).

9. The performing method as claimed in claim 7, **characterized in that** the step of calculating the intersection point (28) between the straight line (26) and the vehicle windshield (12) further comprises a step of sensing the head position of the driver (24).

10. The performing method as claimed in claim 7, **characterized in that** the warning mark (30) is generated at the intersection point (28).
